# EUROPEAN PATENT APPLICATION

(11) **EP 2 083 553 A1**
(43) Date of publication of application: **29.07.2009**
(21) Application number: 09150971.1
(22) Date of filing: 20.01.2009
(51) Int. Cl.: H04L 29/08

(54) **System and method for profile synchronization**

(30) Priority: 22.01.2008 KR 20080006592
(71) Applicant: Samsung Electronics Co., Ltd., Suwon-si, Gyeonggi-Do (KR)
(72) Inventor: Yoo, Ji Yeon c/o Samsung Electronics Co., Ltd, Gyeonggi-do (KR); Kim, Jung Hun c/o Samsung Electronics Co., Ltd, Gyeonggi-do (KR); Kim, Ja Kyung c/o Samsung Electronics Co., Ltd, Gyeonggi-do (KR)
(74) Representative: Harrison Goddard Foote

(57) **Abstract**

A system and method for profile synchronization is provided. The profile synchronization system includes a web server, a synchronization server, and one or more mobile terminals. The web server includes subscriber accounts each containing a subscriber profile and a profile matching table, identifies, when a subscriber profile is changed at the web server, a subscriber profile in the synchronization server corresponding to the changed subscriber profile using the profile matching table, and transmits the changed subscriber profile to the synchronization server. The synchronization server includes a database to store subscriber profiles of the one or more mobile terminals in synchronization with the synchronization server, updates, when a changed subscriber profile is received from the web server, the corresponding subscriber profile, and transmits the changed subscriber profile to the one or more mobile terminals in synchronization. Each of the one or more mobile terminals updates the corresponding subscriber profile for synchronization when a changed subscriber profile is received.

## Description

### BACKGROUND OF THE INVENTION

### 1. Field of the Invention:

The present invention relates generally to profile synchronization. More particularly, the present invention relates to a profile synchronization system and method wherein when a profile of a subscriber is changed at a web server, the changed profile is transmitted to a synchronization server, and one or more mobile terminals synchronized with the synchronization server updates the existing profile with the changed profile, thereby enabling a user to maintain up-to-date profile information.

### 2. Description of the Related Art:

A social networking service focuses on building online communities of related people such as friends, school seniors and juniors, and colleagues, and on management of information regarding the communities. Most social networking websites provide functions that enable members to register their profiles, make friends, and manage community-related information. On the other hand, a personal computer or a mobile terminal may provide functions similar to those of the social networking websites, for example, management of name cards or address books.

However, a social networking website and a mobile terminal, which may provide similar functions, may be not synchronized in terms of managed information. For example, when a member changes personal information such as a phone number and desires to store the changed personal information in mobile terminals of friends, the member must inform the friends of the changed personal information, who then may update the informed personal information in their mobile terminals. This process requires an annoying data input, and may not ensure an instant update of changes in phone numbers or e-mail addresses of the members, thereby failing to facilitate profile management between friends.

Therefore, a need exists for a system that, when a change occurs in personal information of a member such as a phone number and e-mail address, automatically updates the personal information of the member recorded in a list of members who have registered as a friend of the member.

### SUMMARY OF THE INVENTION

An aspect of the present invention is to address at least the above-mentioned problems and/or disadvantages and to provide at least the advantages described below. Accordingly, an aspect of the present invention is to provide a profile synchronization system and method wherein in response to an update made by a subscriber through a data terminal to a profile of the subscriber stored in a web server, a changed item of the updated profile is transmitted to a synchronization server, the profile of the subscriber stored in the synchronization server is updated, and the profile of the subscriber stored in a mobile terminal in synchronization with the synchronization server is updated, thereby enabling the mobile terminal to maintain up-to-date profile information.

In accordance with an aspect of the present invention, a profile synchronization system for use with mobile communication terminals comprising a web server, a synchronization server and one or more mobile terminals is provided. The web server includes subscriber accounts each containing a subscriber profile, a profile matching table that contains a list of subscriber profiles in the synchronization server in synchronization with corresponding subscriber profiles in the web server, identifies, when a subscriber profile is changed at the web server, a subscriber profile in the synchronization server corresponding to the changed subscriber profile using the profile matching table, and transmits the changed subscriber profile to the synchronization server. The synchronization server includes a database to store subscriber profiles of the one or more mobile terminals in synchronization with the synchronization server, updates, when a changed subscriber profile is received from the web server, the corresponding subscriber profile, and transmits the changed subscriber profile to the one or more mobile terminals in synchronization. Each of the one or more mobile terminals updates the corresponding subscriber profile when a changed subscriber profile is received.

In accordance with another aspect of the present invention, a profile synchronization method is provided. The method includes identifying, when a subscriber profile is changed at a web server, a subscriber profile in a synchronization server corresponding to the changed subscriber profile using a profile matching table, transmitting the changed subscriber profile to the synchronization server, updating, when the changed subscriber profile is received, the corresponding subscriber profile, and transmitting the changed subscriber profile to one or more mobile terminals, and updating the corresponding subscriber profile when the changed subscriber profile is received, by the one or more mobile terminals.

In accordance with another aspect of the present invention, a profile synchronization method is provided. The method includes receiving, by a web server, a change checking request from a synchronization server, and determining whether a corresponding subscriber profile is changed at the web server, identifying, when the subscriber profile is changed at the web server, a subscriber profile in the synchronization server corresponding to the changed subscriber profile using a profile matching table, transmitting the changed subscriber profile to the synchronization server, updating, when the changed subscriber profile is received, the corresponding subscriber profile, and transmitting the changed subscriber profile to one or more mobile terminals, and updating, by the one or more mobile terminals, the corresponding subscriber profile when the changed subscriber profile is received.

In accordance with another aspect of the present invention, when a profile of a subscriber registered in a web server is changed, the profile synchronization system enables one or more mobile terminals of other subscribers to acquire the changed profile without needing a separate notification action. That is, when a profile of a subscriber registered in the web server is changed, the changed profile is transmitted to the synchronization server, and the one or more mobile terminals of another subscribers communicating with the synchronization server is synchronized therewith, thereby enabling the one or more mobile terminals to maintain up-to-date profiles of friends.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a schematic diagram illustrating a profile synchronization system according to an exemplary embodiment of the present invention;

FIG. 2 is a diagram illustrating a synchronization server and a web server in a profile synchronization system according to an exemplary embodiment of the present invention;

FIG. 3 illustrates a profile matching table for a profile synchronization system according to an exemplary embodiment of the present invention;

FIG. 4 is a sequence diagram illustrating a profile synchronization method according to another exemplary embodiment of the present invention; and

FIG. 5 is a sequence diagram illustrating a profile synchronization method according to another exemplary embodiment of the present invention.

Throughout the drawings, like reference numerals will be understood to refer to like parts, components, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions incorporated are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to skill in the art, may occur in amounts that do not preclude the effect the characteristic was intended to provide.

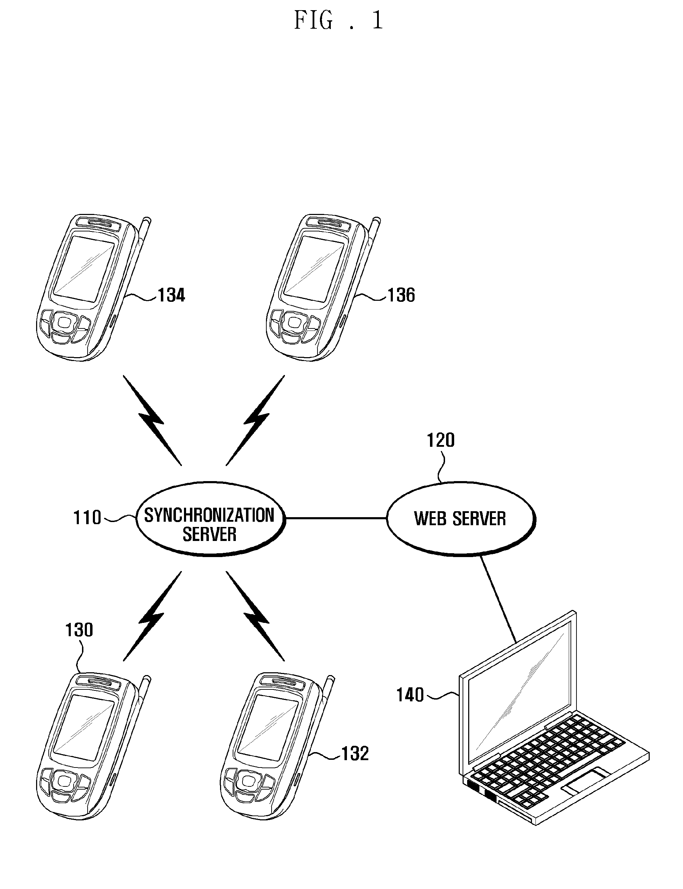

FIG. 1 is a schematic diagram illustrating a profile synchronization system according to an exemplary embodiment of the present invention. The profile synchronization system includes a synchronization server 110, a web server 120, mobile terminals 130 to 136, and a data terminal 140.

The synchronization server 110 may include a database (not shown) to store subscriber profiles of terminals maintaining synchronization with the synchronization server 110. When a changed profile of a subscriber is received from the web server 120, the synchronization server 110 updates stored subscriber profiles of related terminals and transmits the changed profile to the related terminals. In other words, when a changed profile of a particular subscriber is received from the web server 120, the synchronization server 110 updates stored related profiles and synchronizes with connected mobile terminals 130, 132, 134 and 136 to maintain the profile of the subscriber stored in the synchronization server 110 and the profile of the subscriber stored in each of the mobile terminals 130, 132, 134 and 136 in the same state.

The synchronization server 110 may be connected to multiple mobile terminals 130 to 136 and the web server 120.

A subscriber subscribed to the synchronization server 110 may register identification information of the mobile terminal in the synchronization server 110. The identification information may be a telephone number, an International Mobile Equipment Identity (IMEI), an Electronic Serial Number (ESN) assigned to the mobile terminal, and the like. Hence, using identification information of the mobile terminal 130, the synchronization server 110 may synchronize profile data stored in the synchronization server 110 with that of the mobile terminal 130.

The web server 120 includes subscriber accounts for storing subscriber profiles and a profile matching table. The profile matching table may be used to map subscriber profiles stored in the web server 120 to those stored in the synchronization server 110 for synchronization. When a profile of a subscriber stored in the web server 120 is changed, the web server 120 identifies a profile of the subscriber stored in the synchronization server 110 that is synchronized with the changed profile using the profile matching table, and transmits the changed profile to the synchronization server 110. In other words, when a subscriber changes the profile stored in the web server 120, the changed profile is transmitted to the synchronization server 110 connected to the web server 120, and those mobile terminals synchronized with the synchronization server 110 may update the existing profile of the subscriber with the changed profile.

The web server 120 may be connected to the synchronization server 110 and a plurality of data terminals.

A mobile terminal receives a changed subscriber profile from the synchronization server 110, and updates the corresponding subscriber profile to synchronize profile data with that stored in the synchronization server 110. The mobile terminal of the exemplary embodiment may be one of a personal computer, a mobile communication terminal, a personal digital assistant, a smart phone, an International Mobile Telecommunications-2000 (IMT-2000) terminal, a Universal Mobile Telecommunications System (UMTS) terminal, and the like.

The data terminal 140 may connect to the web server 120, and may be used to change a subscriber profile stored in the web server 120. The data terminal 140 may be any terminal that connects to the web server 120 through wired or wireless communication, and may be a personal computer.

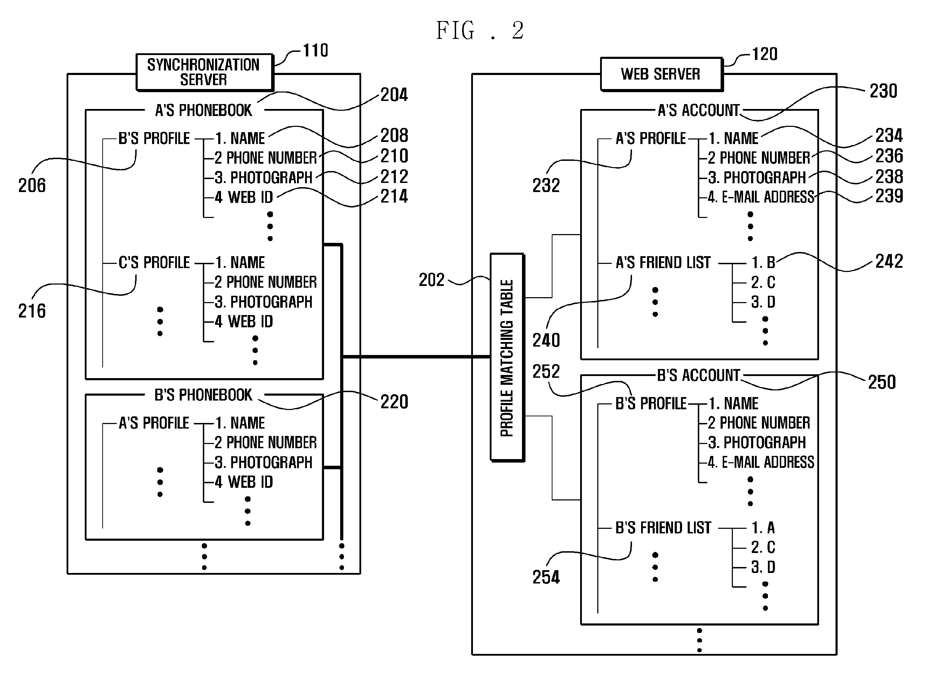

FIG. 2 is a diagram illustrating a synchronization server and a web server in a profile synchronization system in accordance with an exemplary embodiment of the present invention.

Referring to FIG. 2, it is assumed that a synchronization server 110 and a web server 120 include subscribers A and B, where B's profile stored in the web server 120 is changed, B's changed profile is transmitted to the synchronization server 110, and B's profile stored in the synchronization server 110 is synchronized with that stored in the mobile terminal of subscriber A.

In another exemplary embodiment, more than two subscribers or users may access the synchronization server 110 and web server 120. That is, the present invention is not limited by the number of subscribers or users.

The synchronization server 110 may include a database to store subscriber profiles of terminals in synchronization with the synchronization server 110. The database may include a list of phonebooks. When a user subscribes to the synchronization server 110, the user may register identification information of the mobile terminal 130 in the synchronization server 110. The identification information may be at least one of a telephone number, and an international mobile equipment identity. Profiles stored in the synchronization server 110 may be synchronized with those of the mobile terminals 130 to 136 corresponding to registered identification information. The synchronization server 110 and the mobile terminals 130 to 136 may be synchronized using a Synchronization Markup Language (SyncML). The synchronization server 110 may store a subscriber A's phonebook 204 and a subscriber B's phonebook 220. The subscriber A's phonebook 204 may include a subscriber B's profile 206. The subscriber B's profile may include items such as a subscriber B's name 208, phone number 210, photograph 212, and web ID 214. The subscriber B's web ID 214 is an identification symbol of subscriber B that is registered by subscriber A to enable the synchronization server 110 to find the account containing the subscriber B's profile in the web server 120. Using the web ID registered by subscriber A in the synchronization server 110, the subscriber B's profile contained in A's phonebook stored in the synchronization server 110 may be matched with the subscriber B's profile stored in the web server 120.

The subscriber B's profile may include items such as a schedule, and an e-mail address in addition to the items described previously. If subscriber C has been registered as a friend of subscriber A, a subscriber C's profile 216 is also contained in the subscriber A's phonebook.

The synchronization server 110 may also store the subscriber B's phonebook 220, which then includes the profile of subscriber A registered as a friend of subscriber B. The subscriber A's profile in the subscriber B's phonebook 220 may include items such as the subscriber A's name, phone number, photograph, web ID, and the like. The web ID is an identification symbol of subscriber A that is registered by subscriber B to enable the synchronization server 110 to find the account containing the subscriber A's profile in the web server 120. Using the web ID registered by subscriber B in the synchronization server 110, the subscriber A's profile contained in the subscriber B's phonebook stored in the synchronization server 110 can be matched with the subscriber A's profile stored in the web server 120.

If subscriber C has been registered as a friend of subscriber B, the subscriber C's profile may be contained in the subscriber B's phonebook.

The web server 120 may include accounts of subscribers subscribed thereto. In the present exemplary embodiment, the web server 120 includes a subscriber A's account 230 and a subscriber B's account 250. The subscriber A's account 230 may include a subscriber A's profile 232 and a list 240 of friends subscribed as a friend of subscriber A. The subscriber A's profile 232 may include subscriber A's name 234, telephone number 236, photograph 238, e-mail address 239, and the like. The subscriber A's friend list 240 may include subscriber B 242 subscribed as a friend of subscriber A. If subscriber C is subscribed as a friend of subscriber A, the subscriber A's friend list 240 may also include subscriber C.

The subscriber A's friend list in the subscriber A's phonebook stored in the synchronization server 110 may not be the same as that in the subscriber A's account stored in the web server 120. This can result from, for example, a case in which subscriber A records subscriber B as a friend in the subscriber A's phonebook stored in the synchronization server 110 and does not record subscriber B as a friend in the subscriber A's account stored in the web server 120.

The subscriber B's account 250 may include the subscriber B's profile 252 and a list 254 of friends subscribed as a friend of subscriber B. The subscriber B's profile 252 may include the subscriber B's name, telephone number, photograph, and e-mail address 239. The subscriber B's friend list 254 may include subscriber A subscribed as a friend of subscriber B. If subscriber C is subscribed as a friend of subscriber B, the subscriber B's friend list 254 may also include subscriber C.

The web server 120 may include a profile matching table 202. The profile matching table 202 is to match profiles in the accounts stored in the web server 120 with corresponding profiles in the phonebooks stored in the synchronization server 110. Thereto, when subscriber A at the synchronization server 110 records a web ID identifying subscriber B in the web ID field 214 of the subscriber B's profile in the subscriber A's phonebook, the subscriber B's profile contained in the subscriber A's phonebook stored in the synchronization server 110 is matched by items with the subscriber B's profile in the subscriber B's account stored in the web server 120, and this matching data is recorded in the profile matching table 202.

In other words, the subscriber B's profile 252 in the subscriber B's account 250 stored in the web server 120 is matched through the profile matching table 202 with the subscriber B's profile 206 contained in the subscriber A's phonebook 204 stored in the synchronization server 110.

The subscriber A's profile 232 in the subscriber A's account 230 stored in the web server 120 is matched through the profile matching table 202 with the subscriber A's profile contained in the subscriber B's phonebook 220 stored in the synchronization server 110. After matching of individual profiles in the synchronization server 110 with corresponding profiles in the web server 120, when the subscriber A's profile or the subscriber B's profile is changed at the web server 120, a changed item of the profile is sent through the profile matching table 202 to one of the subscriber A's phonebook and the subscriber B's phonebook stored in the synchronization server 110.

In the present exemplary embodiment, the profile matching table 202 is used to match items of the subscriber A's profile in the subscriber A's account stored in the web server 120 with corresponding items of the subscriber A's profile in the subscriber B's phonebook stored in the synchronization server 110. For example, as shown in FIG. 2, the subscriber A's profile in the subscriber B's phonebook 220 stored in the synchronization server 110 includes items such as the subscriber A's name, phone number, photograph, and web ID. The subscriber A's profile 232 in the subscriber A's account 230 stored in the web server 120 includes items such as the subscriber A's name 234, telephone number 236, photograph 238, and e-mail address 239. In this case, the profile item "web ID" in the subscriber B's phonebook 220 stored in the synchronization server 110 does not correspond to the profile item "e-mail address 239" in the subscriber A's account 230 in the web server 120. That is, the profile matching table 202 is used to match common items of a subscriber profile in the web server 120 and in the synchronization server 110 together.

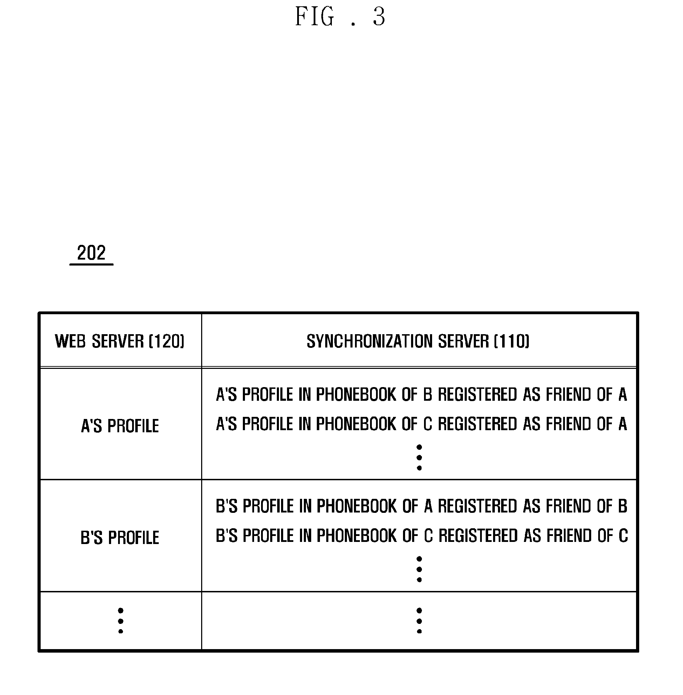

FIG. 3 illustrates a profile matching table for a profile synchronization system according to an exemplary embodiment of the present invention.

Referring to FIG. 3, the profile matching table 202 matches the subscriber A's profile in the subscriber A's account stored in the web server 120 with the subscriber A's profile in the phonebooks of subscriber B and subscriber C subscribed as a friend of subscriber A in the synchronization server 110.

The profile matching table 202 also matches the subscriber B's profile in the subscriber B's account stored in the web server 120 with the subscriber B's profile in the phonebooks of subscriber A and subscriber C subscribed as a friend of subscriber B in the synchronization server 110.

There may be various ways to handle a changed subscriber profile in the web server 120 for synchronization. In an exemplary embodiment, when a change is made to a subscriber profile stored in the web server 120, the changed profile is sent to the synchronization server 110, and a mobile terminal 130 connected to the synchronization server 110 is synchronized with the synchronization server 110. In another exemplary embodiment, the synchronization server 110 sends a change checking request for a particular subscriber profile to the web server 120, the web server 120 determines whether the subscriber profile is changed and sends changed items of the subscriber profile to the synchronization server 110 if changed, and a mobile terminal 130 connected to the synchronization server 110 is synchronized with the synchronization server 110. Next, these exemplary embodiments are described in detail.

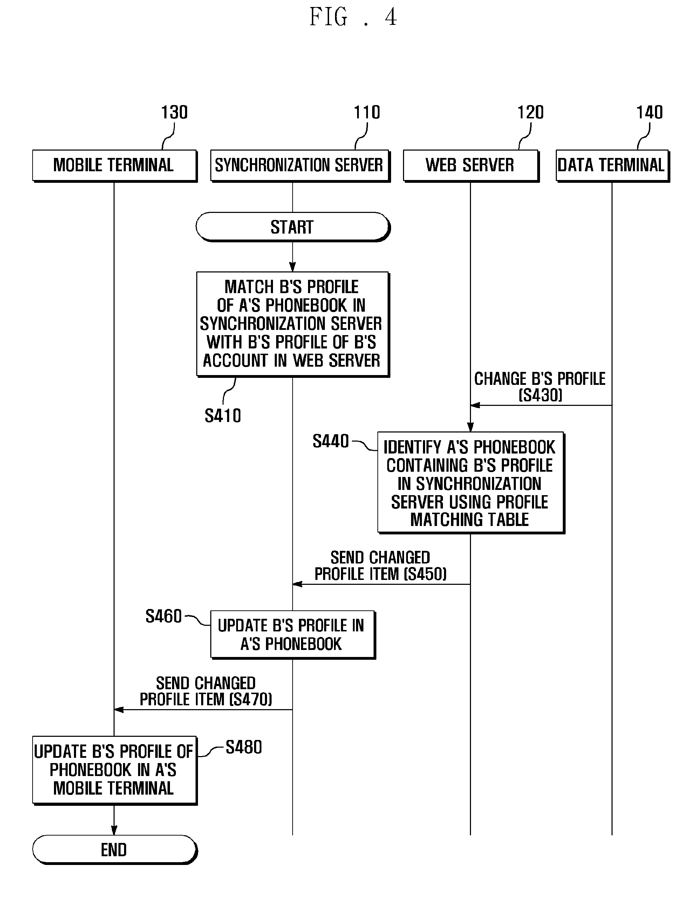

FIG. 4 is a sequence diagram illustrating a profile synchronization method according to another exemplary embodiment of the present invention, in which when the subscriber B's profile stored in the web server 120 is changed, the changed profile is sent to the synchronization server 110, and a mobile terminal 130 is synchronized with the synchronization server 110.

Referring to FIG. 4, the subscriber B's profile in the subscriber B's account stored in the web server 120 is matched with the subscriber B's profile in the subscriber A's phonebook stored in the synchronization server 110 in step S410. Thereto, when subscriber A at the synchronization server 110 records a web ID identifying subscriber B in the web ID field 214 of the subscriber B's profile in the subscriber A's phonebook, the subscriber B's profile contained in the subscriber A's phonebook stored in the synchronization server 110 is matched by items with the subscriber B's profile in the subscriber B's account stored in the web server 120, and this matching data is recorded in the profile matching table 202.

When B's profile stored in the web server 120 is changed through the data terminal 140 in step S430, the web server 120 identifies the phonebook of subscriber A subscribed as a friend of subscriber B in the synchronization server 110 using the profile matching table 202 in step S440. The web server 120 sends a changed item of the subscriber B's profile to the synchronization server 110 together with an indication of the subscriber A's phonebook containing B's profile in step S450. The synchronization server 110 receives the changed profile item from the web server 120, and updates the corresponding item of the subscriber B's profile in the subscriber A's phonebook in step S460. The synchronization server 110 sends the changed profile item for phonebook synchronization to the mobile terminal of subscriber A using identification information obtained at the time of registration in step S470.

This synchronization can be achieved using SyncML. The SyncML is a standard proposed for ensuring consistency of distributed data, and may be used for synchronization of personal information between different devices or applications such as a website, a mobile terminal, a personal computer, and the like. The SyncML is known to persons skilled in the art, and a detailed description thereof is omitted.

The subscriber B's profile in the phonebook stored in the mobile terminal of subscriber A is updated in step S480. Accordingly, subscriber A can use the up-to-date profile of subscriber B without a separate data input.

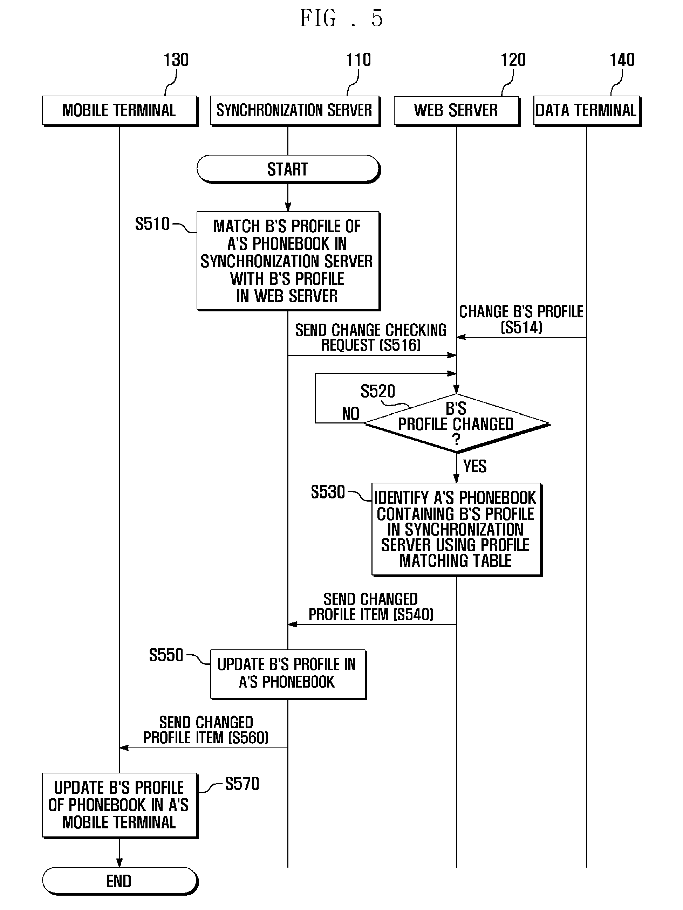

FIG. 5 is a sequence diagram illustrating a profile synchronization method according to another exemplary embodiment of the present invention, in which the synchronization server 110 sends a change checking request for a subscriber profile to the web server 120.

Referring to FIG. 5, the subscriber B's profile in the subscriber B's account stored in the web server 120 is matched with the subscriber B's profile in the subscriber A's phonebook stored in the synchronization server 110 in step S510. Thereto, when subscriber A at the synchronization server 110 records a web ID identifying subscriber B in the web ID field 214 of the subscriber B's profile in the subscriber A's phonebook, the subscriber B's profile contained in the subscriber A's phonebook stored in the synchronization server 110 is matched by items with the subscriber B's profile in the subscriber B's account stored in the web server 120, and this matching data is recorded in the profile matching table 202.

The subscriber B's profile stored in the web server 120 is changed through the data terminal 140 in step S514. Unlike the method of FIG. 4, the web server 120 does not directly send a changed item of the subscriber B's profile to the synchronization server 110.

The synchronization server 110 sends a change checking request for a particular subscriber profile to the web server 120 in step S516. Using the web ID field 214 in the subscriber A's phonebook, the synchronization server 110 may identify the subscriber B's account containing the subscriber B's profile in the web server 120, and send a change checking request for the subscriber B's profile in the subscriber B's account.

The synchronization server 110 may periodically send a change checking request to the web server 120.

The web server 120 determines whether the subscriber B's profile is changed in step S520. If the subscriber B's profile is changed, the web server 120 identifies the phonebook of subscriber A subscribed as a friend of subscriber B in the synchronization server 110 using the profile matching table 202 in step S530. The web server 120 sends a changed item of the subscriber B's profile to the synchronization server 110 together with an indication of the subscriber A's phonebook containing the subscriber B's profile in step S540. The synchronization server 110 receives the changed profile item from the web server 120, and updates the corresponding item of the subscriber B's profile in the subscriber A's phonebook in step S550. The synchronization server 110 sends the changed profile item for phonebook synchronization to the mobile terminal of subscriber A using identification information obtained at the time of registration in step S560. The subscriber B's profile in the phonebook stored in the mobile terminal of subscriber A is updated in step S570. Accordingly, subscriber A can use the up-to-date profile of subscriber B without separate data input.

Although exemplary embodiments of the present invention have been described in detail hereinabove, it should be understood that many variations and modifications of the basic inventive concept herein described, which may appear to those skilled in the art, will still fall within the spirit and scope of the exemplary embodiments of the present invention as defined in the appended claims and their equivalents.

## Claims

1. A profile synchronization system for use with mobile communication terminals, the system comprising a web server (120), a synchronization server (110) and one or more mobile terminals (130),
wherein the web server (120) comprises subscriber accounts each containing a subscriber profile, further comprises a profile matching table that contains a list of subscriber profiles in the synchronization server (110) in synchronization with corresponding subscriber profiles in the web server (120), finds, when a subscriber profile is changed at the web server (120), a subscriber profile in the synchronization server (110) corresponding to the changed subscriber profile using the profile matching table, and transmits the changed subscriber profile to the synchronization server (110);
wherein the synchronization server (110) comprises a database to store subscriber profiles of the one or more mobile terminals in synchronization with the synchronization server (110), updates, when a changed subscriber profile is received from the web server (120), the corresponding subscriber profile, and transmits the changed subscriber profile to the one or more mobile terminals (130) in synchronization; and
wherein each of the one or more mobile terminals (130) updates the corresponding subscriber profile when a changed subscriber profile is received.

2. The system of claim 1, wherein data in the synchronization server (110) is synchronized with data in the one or more mobile terminals (130) using a Synchronization Markup Language (SyncML).

3. The system of claim 1 or 2, wherein each of the one or more mobile terminals (130) registers identification information in the synchronization server (110) at the time of subscription, and the subscriber profile stored in each of the one or more mobile terminals (130) is synchronized with the subscriber profile stored in the synchronization server (110) on the basis of the registered identification information.

4. The system of claim 3, wherein the identification information of the one or more mobile terminal (130) comprises at least one of a telephone number or an International Mobile Equipment Identity (IMEI).

5. The system of any one of claims 1 to 4, wherein the subscriber profile stored in the synchronization server (110) comprises at least one of a name, a phone number, a photograph, and a web ID.

6. The system of claim 5, wherein the web ID matches a subscriber profile in the synchronization server (110) with a subscriber profile in the web server (120).

7. A profile synchronization method, the method comprising:
identifying, when a subscriber profile is changed at a web server (120), a subscriber profile in a synchronization server (110) corresponding to the changed subscriber profile using a profile matching table;
transmitting the changed subscriber profile to the synchronization server (110);
updating, when the changed subscriber profile is received, the corresponding subscriber profile, and transmitting the changed subscriber profile to one or more mobile terminals (130); and
updating, when the changed subscriber profile is received, by each of the one or more mobile terminals (130), the corresponding subscriber profile.

8. The method of claim 7, further comprising matching subscriber profiles in the web server (120) with corresponding subscriber profiles in the synchronization server (110) before identifying the subscriber profile.

9. The method of claim 7 or 8, wherein the profile matching table contains a list of subscriber profiles in the synchronization server (110) in synchronization with corresponding subscriber profiles in the web server (120).

10. The method of any one of claims 7 to 9, wherein data in the synchronization server (110) is synchronized with data in the one or more mobile terminals (130) using a Synchronization Markup Language (SyncML).

11. The method of any one of claims 7 to 10, wherein the subscriber profile stored in the synchronization server (110) comprises at least one of a name, a phone number, a photograph, and a web ID.

12. The method of claim 11, wherein the web ID matches the subscriber profile in the synchronization server (110) with the corresponding subscriber profile in the web server (120).
